(19) Europäisches Patentamt
European Patent Office
Office européen des brevets

(11) **EP 1 098 455 B1**

(12) **EUROPEAN PATENT SPECIFICATION**

(45) Date of publication and mention of the grant of the patent:
**03.01.2007  Bulletin 2007/01**

(51) Int Cl.:
*H04B 7/15* *(2006.01)*  *H04L 12/56* *(2006.01)*

(21) Application number: **00109061.2**

(22) Date of filing: **28.04.2000**

(54) **Spatially switched router for wireless data packets**

Router met raumvielfach-Schaltung für drahtlosen Datenpaketen

Routeur avec de la communation spatiale pour des paquets de données transmis sans fil

(84) Designated Contracting States:
**DE ES FR GB IT SE**

(30) Priority: **03.11.1999  US 433542**

(43) Date of publication of application:
**09.05.2001  Bulletin 2001/19**

(73) Proprietor: **Intel Corporation
Santa Clara, CA 95052 (US)**

(72) Inventors:
• **Berger, Josef
Santa Clara,
California 95051 (US)**
• **Rosenbluth, Irv
Cupertino,
California 95014 (US)**

(74) Representative: **Flint, Adam et al
Beck Greener
Fulwood House,
12 Fulwood Place,
London WC1V 6HR (GB)**

(56) References cited:
**EP-A- 0 755 093        WO-A-86/00760
WO-A-99/52180        US-A- 5 457 465
US-A- 5 736 959**

**Description**

The present invention relates to a spatially switched router useful in the field of wireless communication in general, and in particular, to a router for switched array antennas for high capacity wireless broadband networks.

Wireless communication at high frequencies in the range of 1 GHz to more than 100GHz is used extensively for point-to-point (PP) and point-to-multi point (PMP) communication. For these high frequencies, three types of antennas are commonly used for spatial directional data transmission. Parabolic reflector antennas are used for a fixed narrow spatial direction of transmission. Sectorial horn antennas are used for fixed wide area transmission. Patch antennas are used for fixed direction transmission as well. Those antennas have fixed lobe patterns aligned towards transceivers located in a well defined spatial sector. Once the data link is defined the antennas transmit and receive data from those fixed directions, based on the MAC (Media Access Control) layer either in a circuit connection form, in broadcast form or in a polling form. In PP and PMP systems, the transceivers' antennas at both sides of each link have to be aligned to face each other and the antennas' alignment is usually done manually during the initial link commissioning. When setting up a PMP link, the antenna beams at both sites have to be aligned simultaneously towards each other to reach maximum received signal. In PMP systems, the base station often includes fixed sectorial antennas that are set initially to radiate in well defined sectors, e.g. four low gain antennas of 90 degrees that are positioned to cover 360 degrees. A subscriber's antenna has a narrower spatial divergence to increase its gain, and is aligned towards the base station location in azimuth and elevation until maximum reception is achieved. This alignment guarantees that the base station is also receiving maximum transmission signal via its large lower gain fixed sectorial antenna.

Data packets transmitted and received by the antennas are coming from the same directions. In the case of PMP system that uses FDM B frequency division multiplexing, or TDM B time division multiplexing, or other modulation technique, the base station can broadcast information dedicated to specific transceivers located in a sector. All other transceivers in the same sector will receive the data, decode it, but will ignore it once it is found that the data is not aimed for them. However, by sharing the sector among many transceivers, only a limited amount of data packets can be forwarded simultaneously among the transceivers when transmitting at the same frequency.

The process of alignment in both PP links or in the case of adding a new subscriber at a PMP system is done off-line prior to service activation and involves accurate mechanical adjustment while monitoring the received signal level. In DBS (Direct Broadcast System - a PMP using a satellite), antenna alignment is done in a similar way to terrestrial PMP system. At the subscriber location, the antenna is aligned towards a geostationary satellite until a good signal is detected, and then it is fixed mechanically towards that direction. In all of the above-described cases, the antenna's aperture is aligned mechanically towards the broadcasting source or towards each other before establishing the communication link and starting the service. Based on the received signal level, the direction is mechanically adjusted, sometimes by motor driven antenna, and fixed to the specified direction of maximum reception and transmission.

Few techniques are used to route or direct data towards different transmission directions. The most common is to locate a base station with multiple transceivers, each one with its own separate antenna, where each antenna covers a different sector. The base station MAC layer switches the data at baseband to the transmitter, which covers the sector that contains the subscriber transceiver site where the data packets are aimed. At a PMP base station, typical sectorial antennas such as horn antennas are designed to cover fixed 90, 45, 30 or 15 degree lobes in the horizontal plane and about 7 degrees in the vertical plane. The subscriber antenna, on the other hand, is designed with much narrower beam sensitivity, i.e. higher gain, with similar divergence in horizontal and vertical planes, usually less than 7 degrees. Horn antennas, lens corrected horns and parabolic antennas are commonly used for the subscriber transceiver. Other PMP systems use a subscriber radio with an antenna that receives the downstream data from the base station in one polarization, say horizontal, and transmits upstream in a perpendicular polarization, say vertical, towards the base station, thus increasing network capacity. In all of the above cases, the spatial capacity in a sector is fixed by the alignment of the antennas.

Phased array antennas allow beam steering by controlling the phase of each antenna element relative to phase of the other elements. Those antennas are complicated to control in a very short duration imposed by the burst nature of the packets of data. Thus, phased array antennas are currently used only in some advanced cellular base stations to establish circuit connections for relatively long duration data transmissions, such as in circuit oriented networks where the duration of voice conversation is relatively much longer than packets of data. Phased array antennas are used primarily at low frequencies, typically less than 2.5 GHz, to get high directionality in a multireflections environment. The complexity, high cost and high loss of components, namely phase shifters, at high frequencies prevent use for mass commercial applications.

A simple solution for switching data packets towards different transceivers at different directions is by fast switching the final output energy between different sectorial antennas located in different angles, in say the horizontal plane, thus covering a large field of view. This configuration, however, demands a multiplicity of antennas, each one aimed in a different direction with a multiplicity of transmitters and connection lines to feed those antennas. RF energy needs to be switched and then transported, via long waveguides or coax, to each antenna. The distance from the switches to the antennas creates large signal attenuation, which increases at higher frequencies, and demands increased antenna structural dimensions, cost, and can be environmentally objectionable. Thus, an objective is to control a very fast switch for millimeter waves using a high frequency switched antenna array, with the switch located in close proximity to the antenna array. This is needed to allow high bit rate packets modulating high frequency RF to be efficiently switched towards different transceivers in different spatial directions.

US-A-5736959 discloses a satellite communication system that uses Luneberg lenses.

EP-A-0755093 discloses a directional antenna for wireless networks in which an RF switch assembly controls switching of signals to and from integrated patch antennas.

According to the present invention, there is provided a spatially switched router, as defined in claim 1, for nodes of a network of the type having a plurality of spatially separated network nodes with a number of the nodes having routing information regarding transmission and reception timing and a corresponding direction of transmission and reception for data packets, each node having a local transmitter port and a local receiver port, the spatially switched router comprising: a switch assembly for directing data packets towards other network nodes, an RF optics focusing and collimating antenna coupled to the switch assembly, and RF optics feeding-ports connected between the switch assembly and the RF optics and collimating antenna; and using control signals that synchronously activate the switch assembly to route data packets modulating an RF signal from a local transmitter port towards the RF optics feeding-ports and from the RF optics feeding-ports towards a local receiver port, wherein the control signals are based on the routing information of the data packets, including transmission and reception timing and direction of transmission and reception; characterised by: the switch assembly being an RF switch assembly and by: the same feeding-ports being used for transmitting data packets at one time and receiving data packets at a different time.

An example of spatial routing of data packets in the space between arbitrarily distributed wireless nodes is described by Berger at el. in WO-A-00/25485 (corresponding to U.S. patent application S.N. 09/187,665 entitled "Broadband Wireless Mesh Topology Networks", filed November 5, 1998). The wireless network nodes are designed to select a transmission direction and a receive direction based on the routing address of the data packets to be sent and/or received. The selection of a transmission or receiving direction is done instantaneously to accommodate short bursts of data packets arriving from nodes located at different directions or transmitted towards nodes located at different directions, as defined by the scheduler of the MAC layer of the network nodes, as explained in the prior applications. A communication protocol that is designed to support the scheduling of spatially routed packets between network nodes in any generic topology such as mesh, tree and branch and PMP, is described by Aaronson at el. in EP-A-1059773 (corresponding to U.S. patent application S.N. 09/328,105 entitled "Communication Protocol for Packet Data Particularly in Mesh Topology Wireless Networks", filed June 8, 1999). The description of the media access control (MAC) layer is particularly pertinent.

The presently disclosed spatial switched router (SSR) describes a way of designing a data packet switching and routing apparatus capable of switching data packets and transmitting them spatially between wireless network nodes. The MAC layer defines, in real time, the direction and time of the RF switching, thus directing data packets based on the packets' routes and destination and the network's node spatial location. The prior applications explain that RF switching is established by schedules, held at each node, whereby packets are directed and received from specified, spatially separated, nodes at appointed times. This MAC protocol is assumed in the preferred embodiment such that transmission and reception timing and the corresponding desired direction of transmission or reception are known in advance. However, other packet protocols can be used with address decoding and routing information obtained by decoding of the packets.

The SSR apparatus enables the switching of transmitted and received data packets from one node to other neighboring nodes and from multiple nodes located at different directions and distances to other nodes in their surroundings. Fast switching is accomplished by applying fast, in the range of few nanoseconds to a few microseconds, control signals to a series of microwave switches, synchronously with the data packet transmission and reception timing and synchronously with the direction of transmission and reception. The fast RF switches are designed in a configuration that delivers large isolation between the receiver and transmitter input ports and minimizes the RF losses. The design allows close proximity of the switches to the output feeding ports to reduce coupling and transmission losses, which is especially important at very high frequencies (>20GHz). An nxm switch assembly (n = number of input ports, m = number of output ports) is designed based on a series of custom made 2x4 integrated RF switches made of GaAs integrated circuits (MMIC), designed for the very high microwave frequencies (>20GHz) and a switching array assembly structure closely coupled to the focusing and collimating antenna structure.

A principal feature of the current spatially switched router apparatus is its wireless spatial packet routing and switching capability to form a "connection-less" communication link between a multiplicity of dispersed nodes in a mesh topology network or any other derivative of a mesh topology network such as tree and branch and/or PMP. At the very high microwave frequencies, the system may require a line-of-sight (LOS) between the communicating nodes. The spatial transmission of data packets, such as internet protocol (IP) packets, towards specific directions of the destination nodes allows multiple nodes to transmit at the same time, at the same frequency band and in the same area with minimum mutual interference. This synchronized mesh network increases the available capacity of the network dramatically relative to the common "connection oriented" networks, used in many PMP systems. In those PMP systems, the bandwidth at certain sectors is defined up front by the antenna's fixed illumination pattern. The spatially switched router apparatus of the preferred embodiment can perform fast route diversity and fast load balancing, taking full advantage of the bursty nature of the IP data packets traffic.

The preferred embodiment is optimized for the very high radio frequencies, such as the FCC assigned LMDS (Local Multipoint Distribution Systems) spectrum, 27GHz B 31GHz, and other spectra that are assigned to operators on a regional basis. Those frequencies bands allow large amounts of data distributed at such frequencies, as 10.5GHz (UK, Latin America), 24.5- 26.5 (Europe), 38GHz - 40GHz (US) etc. At those frequencies, the attenuation of transmission lines is very high. Thus, the current design is made of a very compact switch array matrix that is closely coupled to multiple feeding ports, which are designed to feed multiple, focusing and collimating ports of a beam forming optics apparatus operating at radio frequencies. One of the beam forming apparatuses described herein comprises of a known multi-layer, graded-index, cylindrical lens that forms a one dimensional, say horizontal focusing device, wherein the other dimension, say vertical, divergence is defined by the aperture size of the feeding port horn. This apparatus design allows the formation of beams with different divergences in the horizontal plane, where the horizontal plane is the switching plane, and the vertical plane.

In a different beam forming apparatus according to an embodiment of the present invention, the feeding ports feed a multi-layer graded-index spherical lens, such as an RF Luneberg lens, to form beams with similar divergence in the horizontal (switching) plane, and the vertical plane. In both devices, beam switching can cover angles in excess of 120 degrees with very high gain and collection efficiency from different directions inside the sector. The packets of data modulating the RF carrier are switched to focal points, where beams from different focal points are collimated to destination directions. All the beams share the same lens, and use an overlapping aperture, of the cylindrical or spherical lens, thus significantly decreasing the size of the wireless node antenna. The smaller size allows lower losses of RF energy coupled through the antenna, lower weight and minimal intrusion in the environment.

In the drawings:

Fig. 1 is a top plan view of a wireless node with a spatially switched router apparatus for wireless data packets comprising a spherical or cylindrical graded index RF lens to be used in a network in accordance with an embodiment of the present invention;

Fig. 2 is a side plan view of a cylindrical type RF optics focusing and collimating antenna with a feeding port used in the spatially switched router apparatus of Fig. 1;

Fig. 3 is a top plan view of an RF switch assembly for use in the spatially switched router apparatus shown in Fig. 1;

Fig. 4 is a top plan view following Fig. 3, but with low noise amplifiers in the RF switch assembly;

Fig. 5 is a top plan view following Fig. 4, but with power amplifiers in the RF switch assembly; and,

Fig. 6 is an electrical schematic diagram of an RF switch employed in the RF switch assemblies of Figs. 3-5.

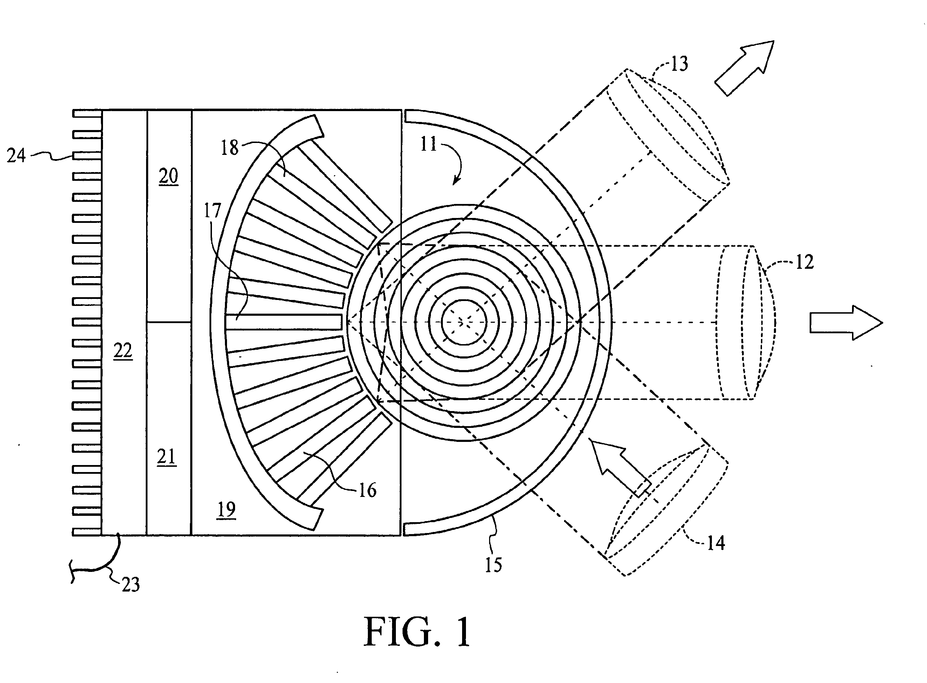

With reference to Fig. 1, an example of a wireless router transceiver node in accordance with an embodiment of the present invention is shown incorporating an RF switch assembly coupled to an RF optics focusing and collimating apparatus. This apparatus is a graded index RF lens which may have a spherical or a cylindrical lens shape. The term "RF" optics", as used herein, means a device operating at radio frequencies, but having optical wave effects on radio waves, such as lens effects. The transceiver comprises a local-port 23 that communicates with local networks. The local-port 23 and similar multiple ports may incorporate a wire connection such as twisted pair for 10/100 base T Ethernet connection, fiber optic connection or wireless transceivers, dedicated for separate local access via frequencies such as ISM (industrial-scientific-medical) bands (2.4GHz and/or 5.7GHz) or the MMDS spectrum.

A central processing unit 22 processes data packets received and transmitted via the local ports 23 and over the air from the remote network nodes. The CPU 22 supplies control signals to activate a switch assembly in a synchronous timing sequence to switch data packets arriving from different directions to the proper receiver and transmitted data packets towards the proper remote node directions. Assume that the remote nodes are located at different directions, say directions corresponding to the beams propagation towards directions 12, 13 and 14. The MAC layer used in this embodiment as an example is based on a pre-established schedule of routing information, particularly the data packets' routing path and destination, priority, and links availability, and determines the data packet routing direction and transmission or reception timing at each node, as more fully described in EP-A-1059773 mentioned above. For example, packets received from a node associated with direction 14, shown in Figure 1 by an RF pulse propagating towards the RF lens, are stored, processed, sorted and routed to either the local port 23 or towards nodes associated with other remote nodes such as directions 12 or 13 (see "RF pulses" shown in Figure 1 propagating in the direction 12 and 13). If routing information is not known beforehand, packets must be decoded to obtain the information.

The receiver 21 comprises an RF low noise amplifier, down converter, IF receiver, analog-to-digital converter and demodulator. The transmitter 20 comprises a modulator, digital-to-analog converter, IF transmitter, up-converter, and RF power amplifier. The system 20 and 21 also includes local oscillators, high frequency oscillators and phase lock loops in accordance with standard high frequency radio transceiver design.

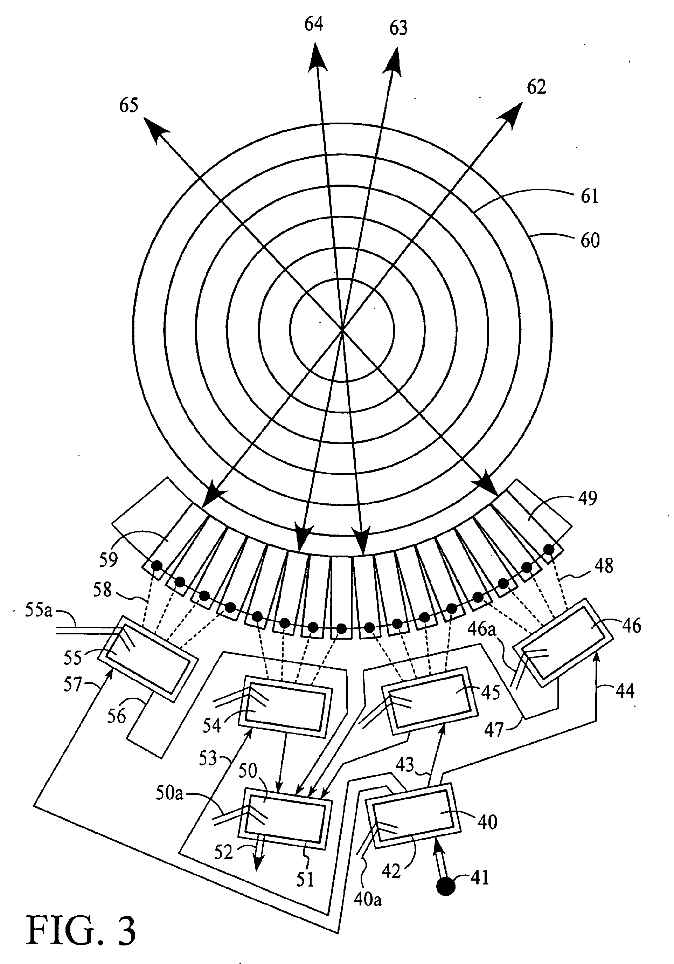

The RF microwave switch assembly 19 comprises an array of RF switches to be described below with reference to Fig. 3. The microwave switch assembly is activated by the control signals applied by the central processing unit 22. The control signals switch data packets, now modulating the radio frequency signal generated by the transmitter 20, to one of the multiplicity of RF feeders, such as feeders 16, 17, or 18. The feeders may be standard microwave horns. Those feeders direct the RF signal to the focal point of the RF lens 11. Lens 11 is preferably a Luneberg lens of the type shown in U.S. Pat. No. 4,309,710. Based on the synchronous control inputs from the central processing area 22, the fast microwave switches routes packets of data to and from the different ports 16, 17, 18, and others. The feeders transfer the RF frequency to the focal points around the lens 11. Lens 11 collimates beams, for example from feeder 17 to the remote node or nodes, located in direction 12, or from feeder 16 to the direction 13.

The same feeders may also serve as receiving ports for RF microwave energy arriving from different antennas. For example, the RF beam from remote node in direction 14 is focused towards feeding-port 18 and synchronously, switched by the switch assembly 19 towards the receiver 21. Thus, a single lens and a switch array assembly structure is used for both transmitting and receiving packets of data, minimizing the size of the transceiver antenna together with an increase of the field of view. In a time division duplex (TDD) mode, the same switch assembly 19 is used for the transmit and receive functions, thus reducing the cost of the transceiver and allowing better matching of the burst flow associated with data packets relative to the transceiver output and input bandwidth.

The RF lens 11 has a radome 15 designed to protect the RF lens material from accumulation of dirt, ice, and rain directly on the lens surface. A heat sink 24 dissipates heat generated by the transceiver and the router electronics.

Microwave lens 11 focuses microwave beams from different directions, say from directions 12, 13 and 14 into the waveguide feeders, say feeders 17, 16 and 18, respectively, located around the circumference of the lens to cover a large field of view that can extend over 120 degrees. The focusing of the RF energy is done by means of graded index dielectric layers centered one around the other, where the high index of refraction layers are in the center. The index of refraction decreases as the diameter of the lens increases. The index of refraction is based on Luneberg expression, where the index of refraction of a spherical lens has ideal imaging properties.

The RF frequency index of refraction distribution n(r) for a Luneberg lens extends over a finite radius r, and is given by:

$$n(r) = (2-r^2/a^2)^{1/2}, \qquad \text{for } r < 1 \qquad \text{Equation (1)}$$

$$n(r) = 1, \qquad \text{for } r > 1 \text{ or } r = 1 \qquad \text{Equation (2)}$$

where r is the distance from the sphere (or cylinder) center and a is the sphere (or cylinder) radius.

Luneberg lenses use a spherical symmetry and have maximum concentration at focal points near the sphere or cylindrical surface for beams of rays arriving from different directions.

Due to the longer wavelength of microwave RF frequencies, usually many millimeters, the lenses are usually implemented by the formation of multiple dielectric spherical shells, usually made of half shells, inserted inside each other and made of variable steps of index of refraction.

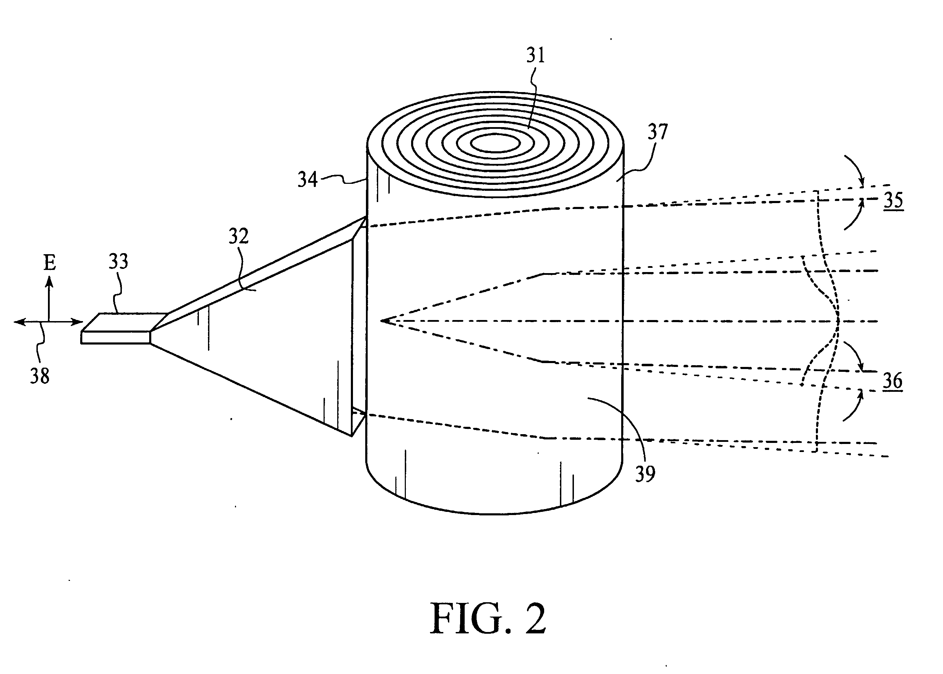

In the preferred embodiment, a cylindrical lens is also described in order to achieve an asymmetric beam forming apparatus. This cylindrical lens is also shown in Fig. 2. The graded index multi-layer microwave cylindrical lens is made of multiple cylindrical tubes with variable diameter one inside each other, where the graded index of each layer is reduced as the layer diameter increases. The core is a cylindrical rod with the highest index of refraction approaching $n(r \sim 0) \sim (2)^{1/2}$.

The one dimensional cylindrical microwave lens 31 implementation of the current invention is easy and inexpensive to manufacture. The cylindrical design of Fig. 2 allows collimation of the diverging feed energy from feeding port 33 in a divergence based on the lens graded index variation relative to the cylinder radial dimension a in Equation (1). The use of multi-layer cylindrical elements to form lens 31 allows the design of high volume manufacturable lenses by forming long tubes with different indices of refraction (say approximately 10 different types of tubes), inserting them inside each other and then cutting the cylinder to the appropriate length dimension to generate multiple lenses. The length of the cylindrical lens is defined by the size of the feeding aperture and is made to be compatible with the beam vertical diffraction inside the cylindrical lens.

In the cylindrical configuration design of Fig. 2, the vertical aperture is defined by the horn vertical aperture which defines the vertical beam 32 diffraction from the feed from source 33 at the elongated focal plane along the cylindrical surface and parallel to the lens axis. A degree of freedom exists to design a different beam divergence for the horizontal and vertical planes based on the applications and the node covering angle.

In a spherical lens design case, a similar beam divergence is formed for the horizontal and vertical dimension. The output port can be implemented by a waveguide feed or a patch feed design. Other techniques such as flared waveguides can be used to form beam gain variation in specific planes.

In Fig. 2, the horn 33 is feeding graded index cylindrical lens 31. Multiple horns are located in a sector around the cylinder, as shown in Fig. 1. The divergence of the beam in the vertical plane is reduced by controlling beam expansion from the feeding-port 33 using horn 32, which expands the RF beam in one dimension only, along the cylindrical axis of the antenna. The horn leads from the switch array assembly, to the focal surface of the lens 34. The horn 32 has a horizontal dimension kept smaller approximately the size of ~1/2 the RF frequency wavelength, thus allowing the horizontal emitted beam to be expanded and collimated by the cylindrical lens graded index structure. The narrow horizontal horn dimension allows the positioning of multiple horns side by side to achieve high resolution in the switching plane. The vertical divergence 35 is usually less than 7.5 degrees and can be designed to be a different size based on the needed gain for each of the beams in the horizontal plane 36, i.e. the switching / steering plane. The lens 31 is seen to have a variation in the graded index layers. The lens 31 has an output aperture 37 that is partially shared among the multiplicity of the feeding ports. Feeding port 33 has an input polarized beam 38, where E is the field polarization, coming from the switch assembly and extending to the feeding-ports horn 32.

An advantage of a cylindrical design for the lens is having feeding ports with a narrow aperture in the horizontal plane, i.e. the switching plane, thus allowing the co-location of multiple feeding ports around the lens periphery, thus increasing the resolution and gain of the multiplicity of beams. The multiplicity of narrow beams, each one of them with narrow divergence and higher gain (high spatial resolution) in the switching plane, allows the multiple use of the same frequencies in the same lens coverage area and also allows an increased bit rate in each direction due to higher gain in the aimed narrower sector.

The RF beam polarization is defined by the orientation and dimensions of the design of the horn waveguide feeds, or alternatively, the patch antenna feed design. The graded index lens configuration can be used for both polarizations in cases where the system design uses transmitting in one polarization and receiving in the perpendicular (other) polarization. In FDD (frequency division duplex) PMP (point to multipoint) systems for example, the transmitting feeds could be located above or below the receiving feeds using the same cylindrical lens. In this way, both transmission and receiving can take place simultaneously at different frequencies. The same can be done at different frequencies and different polarizations to increase transmit-receive isolation even farther while transmit and receive take place simultaneously. In those PMP FDD systems, the single lens configuration allows high resolution in sectorial selections around the base station location.

Instead of waveguide beam feeders, a multiple patch antenna, whose feeds direct RF energy to a curved surface located at focal points of the lens, can be used as well. In the case of patch antenna feed, a symmetrical dimension feed is used for spherical lens feeds or an asymmetrical design is used for cylindrical lens feeds. Certain lens feed designs may also incorporate structures that employ apodization for side lobe suppression.

Another design that incorporates a cylindrical lens can be used simultaneously for transmit and receive signals, usually at different frequencies. This design locates the receiver's feeds in one plane around the lens and the transmitter's feeds in a plane above or below the receiver feeds. In this design, the receiver feeds are isolated from the transmitter feeds. Thus simultaneous operation can take place, either at the same frequency with different timing or on separate frequencies at the same time. This allows the elimination of a transmit and receive diplexer in a frequency division duplex (FDD) design or the T/R (transmit/receive) switch in the TDD design. Receiving and transmitting from different directions at the same time can also increase the isolation. In both cases, lower RF losses are achieved together with an increase of bandwidth.

In Fig. 3, a data packet switch employs 2x16 ports in a switch array. Different switch configurations such as 2x4, 2x8, 2x32 share a similar design concept and could be used. In the 2xm designation, 2 defines the input and output ports, from the transmitter and towards the receiver, the m defines the number of feeding ports towards and from the antenna. Those ports correspond to the different spatial switching directions. A key advantage of the current data packet switched router design is the high isolation achieved between the transmitting signal at transmitter input port 41 and the receiver input port 52. That isolation exceeds 60dB, typically better than 75dB. This is necessary in order to be able to switch from transmitting of short bursts of data packets to the receiving of short bursts of data packets, without saturating the receiver or changing the operating point of the power amplifier. This large isolation is achieved by having switches designed with greater than 30 dB isolation between each one of the ports and having 2xm (m>1) type switches 46, 45, 54, 55 between the transmit switch 40 and the receive switch 50. In general, switches 40 and 50 could be either 1xn or 2xn type switches. In the 2xn switch, the extra port is used for testing purposes to allow monitoring with external test equipment of the different parameters of the data packet switch array. Different monitoring and testing can be performed, including routing signals from different ports to the transmitter test ports 42 and/or the receiver test port 51.

When any feeding port is switched to the receiver, the associated transmitter port is switched off. Thus, isolation is achieved by the double cascaded isolation between the transmitter port and the received signal path. Say that a signal from the feeding port 49 is fed to port 48 of switch 46. The received signal is switched by switch 46 to line 47, and fed into receive switch 50, which in turn is switched to connect line 47 to a port with output line 52 that leads to the receiver. The transmitter port 41 is switched off at the time the receive packets arrive. Thus, port 41 is isolated from port 44 by more than 30 dB, and port 44 is switched off as well at switch 46, thus adding additional isolation of greater than 30 dB between port 44 and any ports at the switch 46. Thus, line 47 of switch 46 is isolated from port 41 by more than 60dB. This leads to isolation greater than 60dB between the receiver port 52 and the transmitter port 41.

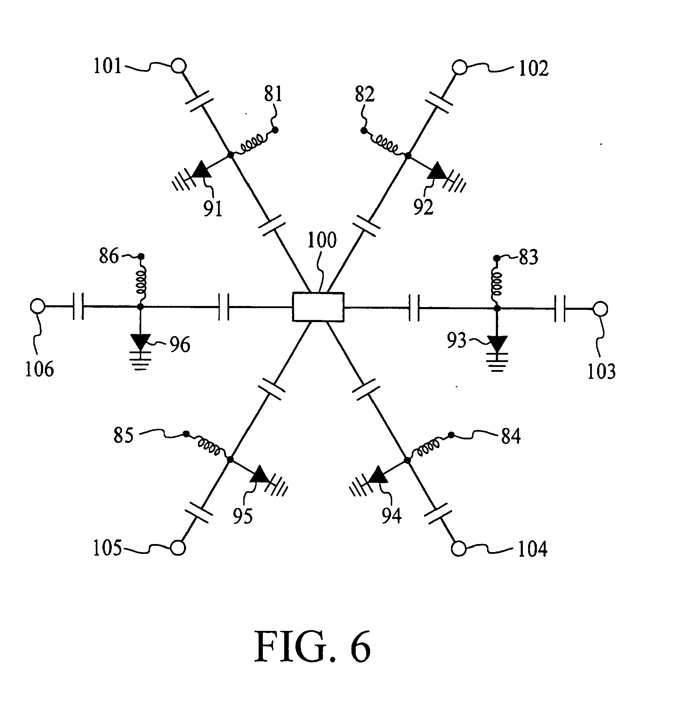

The RF signal from the transmitter is fed into switch 40 via input port 41. Synchronously with the arrival of the data packets to the input port 41, the switch 40 is momentarily enabled by control signals on line 40a, changing the voltage on its internal input diodes connected to port 41, and one of the diodes at one of the output ports. The RF energy that carries the data packets is transferred via the switched diodes, which form the ports, towards one of the switches in the second layer that feeds the antenna. For example, the control voltage switches the RF energy entered at input port 41 towards transmission line 74 that transfers the modulated RF to switch 46. The control voltage signal is also applied synchronously to switch 46 using control signals 46a, which switch RF energy to port 48 that couples the energy to waveguide 49. In turn, waveguide 49 feeds the lens 61 which collimates the beam in the direction 65. At the end of the duration of the data packets, the control voltage is changed to turn off the RF path connecting ports 48 and 44 of switch 46 as well as the RF path between ports 42 and 41 of switch 40. During the reception of data packets via port 49, from direction 65, a control bias voltage is applied to the switching diodes at port 48 and 44 of switch 46, and the diodes connected to transmission line 47 and port 52 at switch 50, as explained below with reference to Fig. 6. This enables the connection of feeding port 49 to the feeding port 52 that leads to the receiver.

Switching the transmit packets to direction 62 is done in a similar way by applying the control signals 40a to switch 40 and 55a to switch 55. The switch assembly thus connects the signal from input port 41, to port 57 of switch 55, transmitting port of switch 55, and then to port 58 leading to the feeding-port 59.

To receive data packets from direction 62, the control signals 50a and 55a switch both the receive switch 50 and the feeding switch 55 to allow the modulated RF signal from direction 62 to pass through from the feeding port 59, port 58 to the receiver port 56 of switch 55 and from there to the output receiver port 52 that leads to the RF receiver.

Different combinations of switching routes are possible with the above-described array, among others. The ability to transmit simultaneously into multiple directions by splitting the energy to multiple feeding ports is present.

The preferred embodiment uses a new 2xm port switch assembly comprising very high-speed switches connecting to antenna feeding ports. This type of switch design, with separate transmit and receive ports, allows in addition to high isolation, the creation of a loop back of RF signals. The loop back of RF signal is enabled by, for example, switching port 41 to 44 in switch 40, and port 44 to line 47 in switch 46 and line 47 to port 52 in switch 50. This allows measurements of the losses and functionality of the different sections and elements of the data packet switch array.

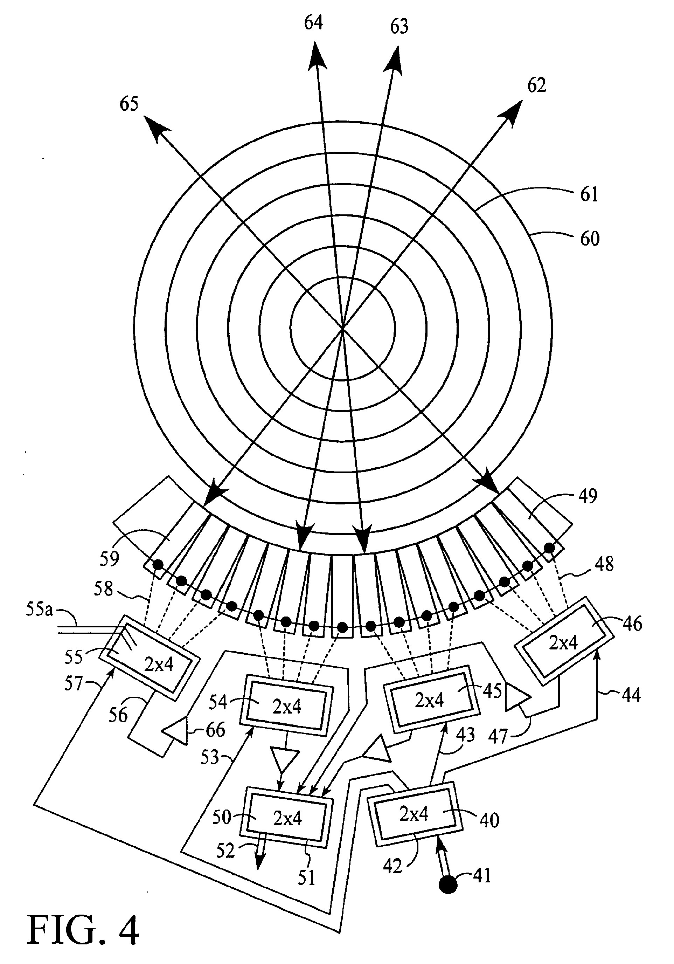

In the design of Fig. 3, the loss from the feeding port through the two cascaded switches to the receive port 52 is typically from 5 to 6 dB. The high noise figure as a result of this high loss could be partially overcome by adding multiple low noise amplifiers (LNA) in the receiving ports of the 2xm switches. Fig. 4 shows the LNA incorporation. LNA 66 amplifies the signal from port 56 of switch 55, feeding it to the receive switch 50. Similar LNAs exist for other ports of the receive switch 50. An output port of switch 46 has LNA 76. An output port of switch 45 has LNA 75. An output port of switch 55 has LNA 78. Since LNAs are relatively low cost, the advantage of adding them is significant.

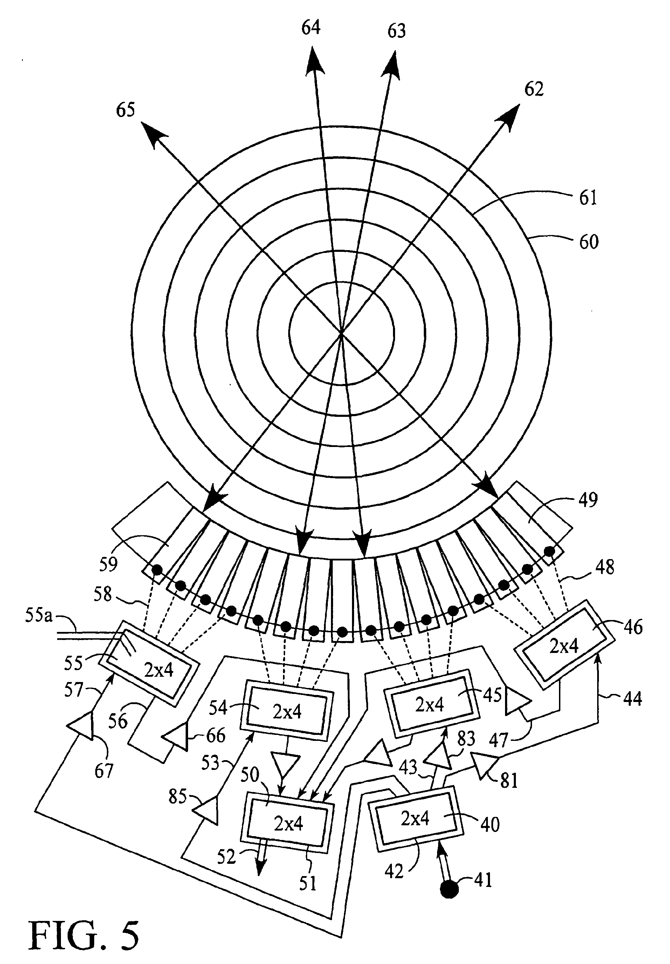

Fig. 5 shows the case where higher power is necessary. Power amplifiers can be added to the switch array between the switch 40 and the switches 45,46,54 and 55. For example, power amplifier 67 is located between switches 40 and 55. Power amplifiers 81, 83 and 85 may overcome the losses added by the switch 40 and the transmission lines before and after it. The cost of power amplifiers is higher than LNAs, thus a trade off of power versus cost should be considered. Due to close proximity of the power amplifiers and the LNA, careful layout should be applied to avoid coupling.

With reference to Fig. 6, a custom made GaAs MMIC of a star shaped array of 6 diodes 91, 92, 93, 94, 95 and 96, are each connected to a transmission line corresponding to RF ports 101, 102, 103, 104, 105 and 106. All diodes are biased to short the connected RF transmission line, by conducting to ground with bias applied at the ports 81-86, in an identical manner. When a control voltage is applied to the corresponding ports 81, 82, 83, 84, 85, and 86 the RF conductivity of the diodes is reduced, enabling the transmission of the RF signal from the RF port to the center 100. When the control signal is applied to two diodes, say 81 and 83 simultaneously, an RF signal from port 101 can flow to port 103 and vice versa. This six diode switch, fabricated as a GaAs integrated circuit, is used as a millimeter wave switch for the 20-40 GHz. The switch is used as a 2x4 switch, and each of the 4 output ports can be switched. The switch is part of the larger 2x16 switch of the preferred embodiment. A similar design is also applicable for switches operating at frequencies above ~40 GHz and below ~20 GHz.

By applying the control signal to switch "OFF" any two diodes, say 91 and 94, a low loss RF path is enabled from one RF port to another port, say ports 101 and 104 correspondingly. The switch allows any other combination of diodes to act as switches when the control signals are "OFF". At ~20 to ~40 GHz the following performance characteristics exist. When all of the diodes are "ON", the port to port isolation is greater than 60 dB. The isolation between a port that is in an "OFF" state and a port that is in an "ON" state is greater than 30dB. The switch loss in the ~20 to ~40 GHz range is about 1.5 dB.

In summary, the preferred embodiment provides a "data packet spatially switched router" comprising an "RF switch assembly" with multiple feeding ports in close proximity to "RF optics focusing and collimating apparatus", that allows selective reception of data packets from multiple narrow sectors, covering a large field of view and selective transmitting of data packets to multiple narrow sectors covering a large field of view, where the same RF optics apparatus and switch assembly switch data packets to multiple directions and receive data packets from multiple directions, based on their routing information.

The data packet spatially switched router is used either in the case of wireless time division duplex (TDD) mode systems or frequency division duplex (FDD) mode and can be implemented in mesh topology wireless networks as well as PMP systems (a subset of mesh topology) and Tree and Branch systems to increase data flow in the same coverage spatial region.

From the above, it will be seen that a network topology may be implemented based on the spatially switched router of the preferred embodiment. Furthermore, when the spatially switched router for data packets described in the preferred embodiment is used in the wireless nodes that comprise wireless data packet networks, a new type of data packet network can be implemented where data can be routed to different directions with timing and directions based on the packet routing information. For example, some of the new network topologies that can be supported are:

(a) Mesh Network. The network nodes incorporate the "spatially switched router". A network node can communicate with multiple neighboring nodes. The nodes use TDD (Time Division Duplex) to communicate with each other. Nodes transmit and receive at different times. The transmit and receive intervals could be done at the same frequency or at different frequencies. In some network designs, the frequencies for transmit and receive are fixed (e.g. by government regulatory agencies. The agencies may assign specific frequencies for use by specific networks). The nodes may also use FDD (frequency division duplex) to communicate with each other. In the FDD case, a node can transmit and receive at the same time, but uses different frequencies, with large spectral separation to avoid the signal from the transmitter interfering with the received signal.

(b) Mesh of Base Stations, wherein each base station acts also as a point to multipoint distribution node to edge nodes. This type of mixed network includes two types of nodes. A first group of nodes are the main network nodes that incorporate the "spatially switch router" and operate as "Base Stations" to communicate data packets to and from a second group of nodes. A second group of nodes are simpler and standard in the prior art. These are edge nodes or "leaf nodes" which do not incorporate the spatially switch router of the present invention. Those nodes have usually a single sector defined by a fixed antenna lobe and are fixedly aligned toward the main network node. The nodes of the second group each receive data from the main node and drop the data to its local port or ports. The nodes of the second group also get data from their local ports and transmit towards a fixed direction of the main nodes. Once getting packet traffic from an edge node, the main nodes of group one can drop the data packets of traffic directly to the network backbone via its local port, route the data packets to other base stations with whom it communicates via wireless mesh trunking network topology as described in (a) above or route the data packets to other edge nodes of the second group, located in one of its sectors.

As described, the simpler second group nodes communicate by transmitting and receiving data from a specific spatial direction of the main node - which operates as a routing base station. Each of the group two nodes has a fixed beam usually aligned mechanically towards one or more base stations. In cases where the main node do not have line of sight with a subscriber edge node, another main node which includes the spatially switched router could be located in a position which has line of sight with the main node and the leaf node and act as a wireless repeater. The point to multipoint section of the network may operate in either TDD mode or FDD mode based on the system design and the regulation for the operating frequency in the area of operation. In FDD the subscriber will communicate with a main node, i.e. a base station, by transmitting at a first frequency and receive information at a second frequency. The base station of the first group will receive the first frequency and will transmit at a second frequency. Combinations of frequencies may be used for different sectors by each one of the first group of nodes avoiding mutual interference and promoting maximum data packet flow in the network.

(c) Basic point to multipoint system - In this network topology case, members of the first group of main nodes incorporate the spatially switched router of the preferred embodiment used as base stations. Members of the simpler group two nodes are used as subscriber nodes. The main nodes communicate traffic to the backbone and the simpler subscriber nodes communicate to and from the base stations to the local subscribers. The spatially switched router in this point to multipoint topology allows the adaptive routing of data packets from and towards different sectors covered by the spatially switched router antenna based on data packet routing information. The multiple sectors allow for a high degree of frequency reuse and a higher antenna gain that allows longer distances inside of each sector. Different sectors can be assigned different frequencies based on system design and data packet routing information.

**Claims**

1. A spatially switched router for nodes of a network of the type having a plurality of spatially separated network nodes with a number of the nodes having routing information regarding transmission and reception timing and a corresponding direction of transmission and reception for data packets, each node having a local transmitter port (20) and a local receiver port (21), the spatially switched router comprising:

   a switch assembly (19) for directing data packets towards other network nodes,
   an RF optics focusing and collimating antenna (11) coupled to the switch assembly (19), and
   RF optics feeding-ports (16-18) connected between the switch assembly (19) and the RF optics and collimating antenna (11)
   and the router comprising means for using control signals that synchronously activate the switch assembly (19) to route data packets modulating an RF signal from a local transmitter port (20) towards the RF optics feeding-ports (16-18) and from the RF optics feeding-ports (16-18) towards a local receiver port (21), wherein the control signals are based on the routing information for the data packets, including transmission and reception timing and direction of transmission and reception; **characterised by**:

   the switch assembly (19) being an RF switch assembly; and by:

   the same feeding-ports (16-18) being used for transmitting data packets at one time and receiving data packets at a different time.

2. A router according to claim 1, where the said RF switch assembly (19) has RF signal amplification means (66).

3. A router according to claim 2, wherein said signal amplification means (66) is located between the feeding-ports (16-18) and the receiver port (21).

4. A router according to claim 2, wherein said signal amplification means is located between the local transmitter port (20) and the feeding-ports (16-18).

5. A router according to any of claims 1 to 4, wherein the RF optics focusing and collimating antenna (11) comprises an RF graded index spherical Luneberg lens designed to focus RF beams in horizontal and vertical planes, where the focusing plane is aligned to feed multiple feeding-ports (16-18) arranged in a sector around the lens.

6. A router according to claim 5, wherein the RF graded index spherical Luneberg lens comprises multilayer spherical shells one inside the other with varying index of refraction that changes from value close to one at the outer surface of the sphere towards a number close to $\sim(2)^{1/2}$ at an internal ball located in the center of the lens.

7. A router according to claim 5 or claim 6, wherein the feeding-ports (16-18) are waveguide feeders or patch antennas arranged side by side in a partial sector around the spherical lens equator to match with the RF lens focal plane to form similar beam divergence in the plane parallel to the beam switching plane and the plane perpendicular to the beam switching plane.

8. A router according to any of claims 1 to 4, wherein the RF optics focusing and collimating antenna (11) has an RF graded index cylindrical lens designed to focus the RF beams in a plane perpendicular to the cylindrical lens axis, said focusing plane being aligned to feed the said multiple feeding-ports (16-18) arranged in a sector around the lens.

9. A router according to claim 8, wherein the lens comprises multilayer cylindrical tubes, one inside the other with varying indices of refraction.

10. A router according to claim 9, wherein the tubes have RF indices of refraction varying from a value close to one at the outer surface tube of the cylinder towards a number close to $\sim(2)^{1/2}$ at an internal cylindrical rod at the center of the cylinder.

**11.** A router according to any of claims 8 to 10, wherein the RF beams diverge in the plane parallel to the axis of the said graded index cylindrical lens, or perpendicular to the beam switching plane, defined by the expansion of the output aperture of the feeding-port (16-18) at that plane along the cylindrical surface.

**12.** A router according to any of claims 8 to 11, wherein the feeding ports are horn waveguides or patch antennas with an expanded aperture in the plane perpendicular to the beam switching plane, thus forming certain beam divergence in the said perpendicular plane with divergence dimension independent of the cylindrical lens beam forming divergence at the beam switching plane.

**13.** A router according to any of claims 1 to 12, wherein the RF switch assembly comprises an integrated circuit switch connected to one or more antenna feeding-ports (16-18) aiming towards different spatial directions and at least one transmitter input port leading to the local transmitter port and at least one receiver output port leading to the local receiver port.

**14.** A router according to any of claims 1 to 13, wherein the RF switch assembly connected to the feeding-ports comprises 2xm feeding switches, where the number 2 refers to a transmitter-port and a receiver-port and the number m refers to the number of switch ports coupled to the RF optics feeding-ports.

**15.** A router according to claim 14, where the RF switch assembly feeding the feeding-ports comprises n feeding-switches, coupled to a total of nxm feeding-ports, wherein each of the n feeding switches is coupled to an additional transmitter-switch that switches the RF energy from the local transmitter port towards the said n feeding-switches and wherein each of the n feeding switches is coupled to an additional receiver-switch that switches the RF energy from the n feeding-switches towards the local receiver port.

**16.** A router according to claim 15, wherein the additional transmitter-switches have at least one input port connected to at least one local transmitter.

**17.** A router according to claim 15 or claim 16, wherein the additional receiver-switches have at least one output port coupled to at least one local receiver.

**18.** A router according to any of claims 15 to 17, wherein the switch assembly comprises n receiver-ports of the n feeding-switches being coupled to n low noise amplifiers (LNA) before coupling to the n ports of the receiver-switch.

**19.** A router according to claim 18, wherein the low noise amplifiers (LNA) are controlled by control signals that minimize gain when no data packets are switched through them to the RF receiver.

**20.** A router according to any of claims 15 to 19, wherein the switch assembly comprises n RF power amplifiers (PA) located at the n transmitter inputs of the n feeding-switches.

**21.** A router according to claim 20, wherein the high power amplifiers are controlled by control signals that minimize gain when no data packets are switched through them to the feeding-switches.

**22.** A router according to any of claims 15 to 21, wherein the transmitter-switch comprises a 2xn switch that switches the RF energy from the transmitter port towards the said n feeding switches, where one of the two ports is coupled to the RF transmitter and the second of the two ports is a transmitter test port, thus enabling monitoring of different parameters including the input RF power from the local transmitter.

**23.** A router according to any of claims 15 to 22, wherein the receiver-switch further comprises means for switching the RF energy from the said n feeding-switches towards the said local receiver port, the receiver-switch being a 2xn RF switch where one of the two ports is coupled to the local receiver and the second port is used as a receiver test port, thus enabling monitoring of different parameters including received signal level from different feeding ports.

**24.** A router according to any of claims 15 to 23, wherein the n feeding-switches are defined by m equalling a number between 1 to 8 ports and n equalling a number between 1 to 8 switches to feed nxm RF optics feeding ports where nxm equals a number between 1 to 64.

**25.** A router according to any of claims 1 to 24, where the said RF switch assembly is switched by control signals to allow transmission of data packets modulating an RF energy at a first radio frequency, to one or more network nodes, located in one or more directions and at the same time allows switching of one or more feeding ports to receive data packets from one or more network nodes where the receiving data packets modulate an RF energy at a second radio frequency different from the first radio frequency.

26. A router according to any of claims 1 to 25, wherein the feeding-ports (16-18) are arranged side by side forming multiple sectors each covering approximately 7.5 degrees in the switching plane.

27. A router according to claim 26, having 16 RF optic feeding-ports that form 16 side by side spatial sectors which cover a total sector size of approximately 120 degrees.

28. A router according to claim 1, wherein the feeding ports are arranged side by side forming multiple sectors each covering approximately 7.5 degrees in the switching plane and approximately 7.5 degrees in the plane perpendicular to the switching plane.

29. A router according to claim 1, wherein the feeding-ports are arranged to feed vertically polarized beams.

30. A router according to claim 1, wherein the feeding ports are arranged to feed horizontally polarized beams.

31. A router according to claim 1, wherein a first portion of the feeding-ports is arranged to feed vertically polarized beams from the local transmitter and a second portion of the feeding-ports is arranged to receive horizontally polarized beams to the local receiver or vice versa, thus reducing interference and increasing isolation between certain groups of transmitting nodes and receiving nodes operating at the same area using closely located frequencies.

32. A router according to claim 1, wherein the RF optics focusing and collimating antenna (11) is an RF graded index multilayer cylindrical lens focusing RF beams in a plane perpendicular to the cylindrical lens axis, wherein the focusing plane is aligned to feed a first group of multiple feeding-ports arranged in a sector around the lens for receiving beams of RF energy from neighboring nodes and a separate second group of feeding-ports arranged in a sector around the cylindrical lens at a different level from the first group where the second group generates transmitting beams of RF energy towards neighboring nodes.

33. A router according to claim 1, wherein the RF optics focusing and collimating antenna (11) is arranged with said RF optics feeding ports set up with a first group of multiple feeding-ports coupled to a receiver switch assembly that is coupled to the local receiver and a second said group of feeding-ports coupled to a transmitter switch assembly that is coupled to local transmitter, where the first group and second group feed different RF optics apertures to allow simultaneously transmitting and receiving of data packets.

34. A router according to claim 1, wherein the RF optics focusing and collimating antenna (11) is arranged with said RF optics feeding-ports feeding one of the group consisting of: separate spherical Luneberg lenses, separate portions of a cylindrical lens, separate parabolic reflector antennas, separate horn antennas, separate patch array antennas for either simultaneous or separate transmission and receiving of data packets modulating RF energy.

35. A router according to claim 34, wherein separate transmit and receive feeding ports have low noise amplifiers located to receive signals directly from the separate receiving feeding-ports.

36. A router according to claim 34, wherein separate RF optics feeding-ports are used for transmitting and receiving of data packets wherein RF power amplifiers are incorporated in the transmitting RF optics feeding-ports.

37. A router according to claim 1, wherein the antenna is a multi-focal point reflector antenna.

38. A router according to claim 1, wherein the RF switch assembly and the feeding-ports form separate transmitting beams and receiving beams, where at specified nodes the beams of the transmitting feeding-ports are polarized perpendicular to the polarization of the beams of the receiving feeding-ports.

39. A router according to claim 38, wherein a multiplicity of transceiver nodes is located at remote distances from said specified nodes, with separate feeding-ports for transmitting said beams at a first polarization to be received by a transceiver receiving a beam from a feeding-port associated with the first polarization and receiving a beam from a feeding-port associated with a second polarization perpendicular to the first polarization transmitted by said specified nodes.

**Patentansprüche**

1. Räumlich geschalteter Router für Knoten eines Netzwerks, der mehrere räumlich getrennte Netzwerkknoten aufweist, wobei eine Anzahl von Knoten Routinginformationen bezüglich der Sende- und Empfangszeitsteuerung und eine entsprechende Sende- und Empfangsrichtung für Datenpakete aufweist, und wobei jeder Knoten einen lokalen Sendeport (20) und einen lokalen Empfangsport (21) aufweist, umfassend:

   eine Schaltungsanordnung (19) zum Richten von Datenpaketen an andere Netzwerkknoten,
   eine HF-Optik-Fokussierungs- und Parallelrichtungsantenne (11), die mit der Schaltungsanordnung (19) gekoppelt ist, und
   HF-Optik-Zuführungsports (16-18), die zwischen der Schaltungsanordnung (19) und der HF-Optik-Fokussierungs- und Parallelrichtungsantenne (11) geschaltet sind, und der Router umfasst Mittel zum Verwenden der Steuersignale, die die Schaltungsanordnung (19) gleichzeitig aktivieren, um Datenpakete zu routen, indem ein HF-Signal von einem lokalen Sendeport (20) an die HF-Optik-Zuführungsports (16-18) und von den HF-Optik-Zuführungsports (16-18) an einen lokalen Empfangsport (21) moduliert wird, wobei die Steuersignale auf den Routinginformationen für die Datenpakete basieren, einschließlich zeitlicher Sende- und Empfangszeitsteuerung und Sende- und Empfangsrichtung, **dadurch gekennzeichnet, dass**:

   die Schaltungsanordnung (19) eine HF-Schaltungsanordnung ist und dass
   die gleichen Zuführungsports (16-18) zu einem Zeitpunkt zum Senden der Datenpakete und zu einem anderen Zeitpunkt zum Empfangen der Datenpakete verwendet werden.

2. Router nach Anspruch 1, wobei die HF-Schaltungsanordnung (19) HF-Signalverstärkungsmittel (66) aufweist.

3. Router nach Anspruch 2, wobei sich das Signalverstärkungsmittel (66) zwischen den Zuführungsports (16-18) und dem Empfangsport (21) befindet.

4. Router nach Anspruch 2, wobei sich das Signalverstärkungsmittel zwischen dem lokalen Sendeport (20) und den Zuführungsports (16-18) befindet.

5. Router nach einem der Ansprüche 1 bis 4, wobei die HF-Optik-Fokussierungs- und Parallelrichtungsantenne (11) eine sphärische Lüneberglinse mit HF-abgestuftem Index umfasst, die dafür ausgelegt ist, HF-Strahlen in horizontalen und vertikalen Ebenen zu fokussieren, wobei die Fokussierungsebene ausgerichtet ist, mehreren in einem Abschnitt um die Linse angeordneten Zuführungsports (16-18) zuzuführen.

6. Router nach Anspruch 5, wobei die sphärische Lüneberglinse mit HF-abgestuftem Index mehrschichtige sphärische Hüllen, eine in der anderen, mit variierendem Brechungsindex umfasst, der sich von einem Wert nahe Eins an der Außenoberfläche der Sphäre hin zu einer Zahl nahe $\sim(2)^{1/2}$ an einer inneren im Zentrum der Linse angeordneten Kugel ändert.

7. Router nach Anspruch 5 oder 6, wobei die Zuführungsports (16-18) Wellenleiterzuführungen oder Patchantennen sind, die nebeneinander in einem Teilabschnitt um den Äquator der sphärischen Linse angeordnet sind, um mit der Fokussierungsebene der HF-Linse übereinzustimmen, um eine ähnliche Strahldivergenz in der parallel zur Strahlenvermittlungsebene angeordneten Ebene und der senkrecht zur Strahlenvermittlungsebene stehenden Ebene auszubilden.

8. Router nach einem der Ansprüche 1 bis 4, wobei die HF-Optik-Fokussierungs- und Parallelrichtungsantenne (11) eine zylindrische Linse mit HF-abgestuftem Index aufweist, die dafür ausgelegt ist, die HF-Strahlen in einer Ebene senkrecht zu der zylindrischen Linsenachse zu fokussieren, wobei die Fokussierungsebene ausgerichtet ist, den in einem Abschnitt um die Linse angeordneten mehreren Zuführungsports (16-18) zuzuführen.

9. Router nach Anspruch 8, wobei die Linse mehrschichtige zylindrische Röhren eine in der anderen mit variierenden Brechungsindizes umfasst.

10. Router nach Anspruch 9, wobei die Röhren HF-Brechungsindizes aufweisen, die sich von einem Wert nahe Eins an der Außenoberflächenröhre des Zylinders hin zu einer Zahl nahe ~$(2)^{1/2}$ an dem inneren zylindrischen Stab im Zentrum des Zylinders ändern.

11. Router nach einem der Ansprüche 8 bis 10, wobei die HF-Strahlen in der Ebene parallel zu der Achse der zylindrischen Linse mit abgestuftem Index oder senkrecht zu der Strahlenvermittlungsebene divergieren, definiert durch die Ausdehnung der Ausgangsöffnung des Zuführungsports (16-18) an dieser Ebene entlang der zylindrischen Oberfläche.

12. Router nach einem der Ansprüche 8 bis 11, wobei die Zuführungsports Trichterwellenleiter oder Patchantennen mit einer ausgedehnten Öffnung in der Ebene senkrecht zu der Strahlenvermittlungsebene sind, wodurch eine bestimmte Strahlendivergenz in der senkrechten Ebene mit einer Divergenzgröße unabhängig von dem zylindrischen Linsenstrahl, der eine Divergenz an der Strahlenvermittlungsebene ausbildet, ausgebildet wird.

13. Router gemäß einem der Ansprüche 1 bis 12, wobei die HF-Schaltungsanordnung einen integrierten Schaltungskreislauf umfasst, der mit einem oder mehreren Antennenzuführungsports (16-18) verbunden ist, die in verschiedene räumliche Richtungen zielen, und mindestens ein Sendeeingabeport führt zu dem lokalen Sendeport und mindestens ein Empfangsausgabeport führt zu dem lokalen Empfangsport.

14. Router nach einem der Ansprüche 1 bis 13, wobei die mit den Zuführungsports verbundene HF-Schaltungsanordnung 2xm Zuführungsschalter umfasst, wobei sich die Zahl 2 auf einen Sendeport und einen Empfangsport bezieht und sich die Zahl m auf die Anzahl der mit den HF-Optik-Zuführungsports gekoppelten Schaltungsports bezieht.

15. Router nach Anspruch 14, wobei die den Zuführungsports zuführende HF-Schaltungsanordnung n mit insgesamt nxm Zuführungsports gekoppelte Zuführungsschalter umfasst, wobei jeder der n Zuführungsschalter mit einem zusätzlichen Sendeschalter gekoppelt ist, der die HF-Energie von dem lokalen Sendeport zu den n Zuführungsschaltern schaltet, und wobei jeder der n Zuführungsschalter mit einem zusätzlichen Empfangsschalter gekoppelt ist, der die HF-Energie zu dem lokalen Empfangsport schaltet.

16. Router nach Anspruch 15, wobei die zusätzlichen Sendeschalter mindestens einen Eingabeport aufweisen, der mit mindestens einem lokalen Sender verbunden ist.

17. Router nach Anspruch 15 oder Anspruch 16, wobei die zusätzlichen Empfangsschalter mindestens einen Ausgabeport aufweisen, der mit mindestens einem lokalen Empfänger gekoppelt ist.

18. Router nach einem der Ansprüche 15 bis 17, wobei die Schaltungsanordnung n Empfangsports der n Zuführungsschalter umfasst, die vor dem Koppeln mit den n Ports des Empfangsschalter mit n rauscharmen Verstärkern (LNA) gekoppelt sind.

19. Router nach Anspruch 18, wobei die rauscharmen Verstärker (LNA) durch Steuersignale gesteuert werden, die Verstärkung minimieren, wenn durch sie keine Datenpakete an den HF-Empfänger geschaltet sind.

20. Router nach einem der Ansprüche 15 bis 19, wobei die Schaltungsanordnung n HF-Leistungsverstärker (PA) umfasst, die sich an den n Sendeeingaben der n Zuführungsschalter befinden.

21. Router nach Anspruch 20, wobei die Hochleistungsverstärker durch Steuersignale gesteuert werden, die die Verstärkung minimieren, wenn durch sie keine Datenpakete an die Zuführungsschalter geschaltet sind.

22. Router nach einem der Ansprüche 15 bis 21, wobei der Sendeschalter einen 2xn Schalter umfasst, der die HF-Energie von dem Sendeport zu den n Zuführungsschaltern schaltet, wobei einer der beiden Ports mit dem HF-Sender gekoppelt ist und der zweite der beiden Ports ein Sendertestport ist, wodurch die Überwachung verschiedener Parameter einschließlich der HF-Eingabeleistung von dem lokalen Sender ermöglicht wird.

23. Router nach einem der Ansprüche 15 bis 22, wobei der Empfangsschalter weiter Mittel zum Schalten der HF-Energie von den n Zuführungsschaltern zu dem lokalen Empfangsport umfasst, wobei der Empfangsschalter ein 2xn HF-Schalter ist , und wobei einer der beiden Ports mit dem lokalen Empfänger gekoppelt ist und der zweite Port als ein Empfängertestport verwendet wird, wodurch die Überwachung von verschiedenen Parametern einschließlich der empfangenen Signalebene von verschiedenen Zuführungsports ermöglicht wird.

**24.** Router nach einem der Ansprüche 15 bis 23, wobei die n Zuführungsschalter durch m, das einer Anzahl zwischen 1 bis 8 Ports entspricht, und n, das einer Anzahl zwischen 1 und 8 Schaltern entspricht, definiert sind, um nxm HF-Optik-Zuführungsports zuzuführen, wobei nxm einer Zahl zwischen 1 bis 64 entspricht.

**25.** Router nach einem der Ansprüche 1 bis 24, wobei die HF-Schaltungsanordnung durch Steuersignale geschaltet wird, um das Senden von Datenpaketen durch Modulieren einer HF-Energie bei einer ersten Hochfrequenz an einen oder mehrere Netzwerkknoten zu ermöglichen, die sich in einer oder mehreren Richtungen befinden, und gleichzeitig das Schalten von einem oder mehreren Zuführungsports zum Empfangen von Datenpaketen von einem oder mehreren Netzwerkknoten zu ermöglichen, wobei die empfangenden Datenpakete eine HF-Energie an einer zweiten, sich von der ersten Hochfrequenz unterscheidenden Hochfrequenz modulieren.

**26.** Router nach einem der Ansprüche 1 bis 25, wobei die Zuführungsports (16-18) nebeneinander angeordnet sind und mehrere Kreisausschnitte ausbilden, die jeweils ungefähr 7,5 Grad in der Vermittlungsebene abdecken.

**27.** Router nach Anspruch 26, der 16 HF-Optik-Zuführungsports ausweist, die 16 nebeneinander liegende räumliche Kreisausschnitte ausbilden, die eine Gesamtkreisausschnittsgröße von ungefähr 120 Grad abdecken.

**28.** Router nach Anspruch 1, wobei die Zuführungsports nebeneinander angeordnet sind und mehrere Kreisausschnitte ausbilden, die jeweils ungefähr 7,5 Grad in der Vermittlungsebene und ungefähr 7,5 Grad in der Ebene senkrecht zu der Vermittlungsebene abdecken.

**29.** Router nach Anspruch 1, wobei die Zuführungsports eingerichtet sind, um vertikal polarisierte Strahlen zuzuführen.

**30.** Router nach Anspruch 1, wobei die Zuführungsports eingerichtet sind, um horizontal polarisierte Strahlen zuzuführen.

**31.** Router nach Anspruch 1, wobei ein erster Teil der Zuführungsports eingerichtet ist, vertikal polarisierte Strahlen von dem lokalen Sender zuzuführen, und ein zweiter Teil der Zuführungsports eingerichtet ist, horizontal polarisierte Strahlen an dem lokalen Empfänger zu empfangen, oder umgekehrt, wodurch die Interferenz verringert wird und die Entkopplung zwischen bestimmten Gruppen sendender Knoten und empfangender Knoten, die in dem gleichen Bereich unter Verwendung nahe beieinander liegender Frequenzen arbeiten, erhöht wird.

**32.** Router nach Anspruch 1, wobei die HF-Optik-Fokussierungs- und Parallelrichtungsantenne (11) eine mehrschichtige zylindrische Linse mit HF-abgestuftem Index ist, die HF-Strahlen in einer Ebene senkrecht zu der zylindrischen Linsenachse fokussiert, wobei die Fokussierungsebene ausgerichtet ist, eine erste Gruppe mehrerer Zuführungsports, die in einem Kreisausschnitt um die Linse zum Empfangen von Strahlen mit HF-Energie von benachbarten Knoten angeordnet ist, und eine getrennte zweite Gruppe von Zuführungsports, die in einem Kreisausschnitt um die zylindrische Linse herum an einer anderen Ebene als die erste Gruppe angeordnet ist, zuzuführen, wobei die zweite Gruppe Sendestrahlen mit HF-Energie zu benachbarten Knoten erzeugt.

**33.** Router nach Anspruch 1, wobei die HF-Optik-Fokussierungs- und Parallelrichtungsantenne (11) mit den HF-Optik-Zuführungsports eingerichtet ist, die aus einer ersten Gruppe mehrerer Zuführungsports, die mit einer mit dem lokalen Empfänger gekoppelten Empfangsschaltungsanordnung gekoppelt ist, und einer zweiten Gruppe von Zuführungsports, die mit einer mit einem lokalen Sender gekoppelten Sendeschaltungsanordnung gekoppelt ist, aufgebaut ist, wobei die erste Gruppe und die zweite Gruppe verschiedene HF-Optik-Öffnungen zuführen, um gleichzeitiges Senden und Empfangen der Datenpakete zu ermöglichen.

**34.** Router nach Anspruch 1, wobei die HF-Optik-Fokussierungs- und Parallelrichtungsantenne (11) mit den HF-Optik-Zuführungsports angeordnet ist, eine aus der Gruppe zuzuführen bestehend aus: getrennten sphärischen Lüneberglinsen, getrennten Abschnitten einer zylindrischen Linse, getrennten parabolischen Reflektorantennen, getrennten Trichterantennen, getrennten Patch-Array-Antennen entweder für gleichzeitiges oder getrenntes Senden und Empfangen von Datenpaketen durch Modulieren der HF-Energie.

**35.** Router nach Anspruch 34, wobei getrennte Sende- und Empfangszuführungsports rauscharme Verstärker aufweisen, die zum direkten Empfangen von Signalen der getrennten Empfangszuführungsports eingerichtet sind.

**36.** Router nach Anspruch 34, wobei getrennte HF-Optik-Zuführungsports zum Senden und Empfangen von Datenpaketen verwendet werden, wobei HF-Leistungsverstärker in die sendenden HF-Optik-Zuführungsports integriert sind.

**37.** Router nach Anspruch 1, wobei die Antenne eine Mehrfokuspunkt-Reflektorantenne ist.

**38.** Router nach Anspruch 1, wobei die HF-Schaltungsanordnung und die Zuführungsports getrennte Sendestrahlen und Empfangsstrahlen ausbilden, wobei bei festgelegten Knoten die Strahlen der sendenden Zuführungsports senkrecht zur Polarisierung der Strahlen der empfangenden Zuführungsports polarisiert sind.

**39.** Router nach Anspruch 38, wobei sich mehrere Sende-Empfangsknoten entfernt von den festgelegten Knoten befinden, mit getrennten Zuführungsports zum Senden der Strahlen bei einer ersten Polarisierung, die von einem Sende-Empfänger empfangen werden, der einen Strahl von einem Zuführungsport empfängt, der mit der ersten Polarisation verbunden ist, und einen Strahl von einem Zuführungsport empfängt, der mit einer zweiten Polarisation senkrecht zu der ersten Polarisation verknüpft ist, die durch die festgelegten Knoten übertragen wird.

**Revendications**

**1.** Routeur à commutation spatiale pour des noeuds d'un réseau du type ayant une pluralité de noeuds de réseau séparés spatialement, un certain nombre des noeuds ayant des informations de routage concernant les instants d'émission et de réception et une direction correspondante d'émission et de réception pour des paquets de données, chaque noeud ayant un port d'émetteur local (20) et un port de récepteur local (21), le routeur à commutation spatiale comprenant :

un ensemble de commutateur (19) permettant de diriger des paquets de données vers d'autres noeuds de réseau,
une antenne de focalisation et de collimation en RF optique (11) couplée à l'ensemble de commutateur (19), et des ports d'alimentation en RF optique (16-18) connectés entre l'ensemble de commutateur (19) et l'antenne de focalisation et de collimation en RF optique (11),
et le routeur comprenant des moyens pour utiliser des signaux de commande qui activent de manière synchrone l'ensemble de commutateur (19) afin de router des paquets de données modulant un signal RF depuis un port d'émetteur local (20) vers les ports d'alimentation en RF optique (16-18) et depuis les ports d'alimentation en RF optique (16-18) vers un port de récepteur local (21), dans lequel les signaux de commande sont basés sur les informations de routage pour les paquets de données, incluant les instants d'émission et de réception ainsi que la direction d'émission et de réception ; **caractérisé en ce que** :

l'ensemble de commutateur (19) est un ensemble de commutateur RF ; et **en ce que** :

les mêmes ports d'alimentation (16-18) sont utilisés pour émettre des paquets de données à un instant et recevoir des paquets de données à un instant différent.

**2.** Routeur selon la revendication 1, dans lequel ledit ensemble de commutateur RF (19) possède des moyens d'amplification de signal RF (66).

**3.** Routeur selon la revendication 2, dans lequel lesdits moyens d'amplification de signal (66) sont situés entre les ports d'alimentation (16-18) et le port de récepteur (21).

**4.** Routeur selon la revendication 2, dans lequel lesdits moyens d'amplification de signal sont situés entre le port d'émetteur local (20) et les ports d'alimentation (16-18).

**5.** Routeur selon l'une quelconque des revendications 1 à 4, dans lequel l'antenne de focalisation et de collimation en RF optique (11) comprend une lentille de Luneberg sphérique à gradient d'indice RF conçue pour focaliser des faisceaux RF dans des plans horizontaux et verticaux, dans laquelle le plan de focalisation est aligné de façon à alimenter de multiples ports d'alimentation (16-18) disposés en un secteur autour de la lentille.

**6.** Routeur selon la revendication 5, dans lequel la lentille de Luneberg sphérique à gradient d'indice RF comprend des enveloppes sphériques multicouches, l'une à l'intérieur de l'autre, ayant différents indices de réfraction qui varient depuis une valeur proche de 1 au niveau de la surface extérieure de la sphère jusqu'à une valeur proche de $\sim(2)^{1/2}$ au niveau d'une bille interne située au centre de la lentille.

**7.** Routeur selon la revendication 5 ou la revendication 6, dans lequel les ports d'alimentation (16-18) sont des dispositifs d'alimentation à guide d'ondes ou des antennes à plaque, disposés côte à côte en un secteur partiel autour de l'équateur de la lentille sphérique de façon à correspondre au plan focal de la lentille RF afin de former une divergence de faisceau similaire dans le plan parallèle au plan de commutation de faisceau et dans le plan perpendiculaire au plan de commutation de faisceau.

**8.** Routeur selon l'une quelconque des revendications 1 à 4, dans lequel l'antenne de focalisation et de collimation en RF optique (11) a une lentille cylindrique à gradient d'indice RF conçue pour focaliser les faisceaux RF dans un plan perpendiculaire à l'axe de la lentille cylindrique, ledit plan de focalisation étant aligné de façon à alimenter lesdits multiples ports d'alimentation (16-18) disposés en un secteur autour de la lentille.

**9.** Routeur selon la revendication 8, dans lequel la lentille comprend des tubes cylindriques multicouches, l'un à l'intérieur de l'autre, ayant différents indices de réfraction.

**10.** Routeur selon la revendication 9, dans lequel les tubes ont des indices de réfraction RF qui varient depuis une valeur proche de 1 au niveau du tube de surface extérieure du cylindre jusqu'à une valeur proche de $\sim(2)^{1/2}$ au niveau d'un bâtonnet cylindrique interne au centre du cylindre.

**11.** Routeur selon l'une quelconque des revendications 8 à 10, dans lequel les faisceaux RF divergent dans le plan parallèle à l'axe de ladite lentille cylindrique à gradient d'indice, ou perpendiculaire au plan de commutation de faisceau, défini par l'extension de l'ouverture de sortie du port d'alimentation (16-18) au niveau de ce plan le long de la surface cylindrique.

**12.** Routeur selon l'une quelconque des revendications 8 à 11, dans lequel les ports d'alimentation sont des guides d'ondes en cornet ou des antennes à plaque ayant une ouverture étendue dans le plan perpendiculaire au plan de commutation de faisceau, formant ainsi une certaine divergence de faisceau dans ledit plan perpendiculaire, la dimension de divergence étant indépendante du faisceau de lentille cylindrique formant une divergence au niveau du plan de commutation de faisceau.

**13.** Routeur selon l'une quelconque des revendications 1 à 12, dans lequel l'ensemble de commutateur RF comprend un commutateur à circuits intégrés connecté à un ou plusieurs ports d'alimentation d'antenne (16-18) pointant vers des directions spatiales différentes, et au moins un port d'entrée d'émetteur menant au port d'émetteur local et au moins un port de sortie de récepteur menant au port de récepteur local.

**14.** Routeur selon l'une quelconque des revendications 1 à 13, dans lequel l'ensemble de commutateur RF connecté aux ports d'alimentation comprend 2xm commutateurs d'alimentation, où le nombre 2 fait référence à un port d'émetteur et à un port de récepteur et le nombre m fait référence au nombre de ports de commutateur couplés aux ports d'alimentation en RF optique.

**15.** Routeur selon la revendication 14, dans lequel l'ensemble de commutateur RF alimentant les ports d'alimentation comprend n commutateurs d'alimentation couplés à un total de nxm ports d'alimentation, dans lequel chacun des n commutateurs d'alimentation est couplé à un commutateur d'émetteur supplémentaire qui commute l'énergie RF circulant du port d'émetteur local vers lesdits n commutateurs d'alimentation, et dans lequel chacun des n commutateurs d'alimentation est couplé à un commutateur de récepteur supplémentaire qui commute l'énergie RF circulant des n commutateurs d'alimentation vers le port de récepteur local.

**16.** Routeur selon la revendication 15, dans lequel les commutateurs d'émetteur supplémentaires possèdent au moins un port d'entrée connecté à au moins un émetteur local.

**17.** Routeur selon la revendication 15 ou la revendication 16, dans lequel les commutateurs de récepteur supplémentaires possèdent au moins un port de sortie couplé à au moins un récepteur local.

**18.** Routeur selon l'une quelconque des revendications 15 à 17, dans lequel l'ensemble de commutateur comprend n ports de récepteur des n commutateurs d'alimentation couplés à n amplificateurs à faible bruit (LNA) avant couplage aux n ports du commutateur de récepteur.

**19.** Routeur selon la revendication 18, dans lequel les amplificateurs à faible bruit (LNA) sont commandés par des signaux de commande qui minimisent le gain lorsqu' aucun paquet de données n'est commuté par leur intermédiaire à destination du récepteur RF.

**20.** Routeur selon l'une quelconque des revendications 15 à 19, dans lequel l'ensemble de commutateur comprend n amplificateurs de puissance RF(PA) situés au niveau des n entrées d'émetteur des n commutateurs d'alimentation.

**21.** Routeur selon la revendication 20, dans lequel les amplificateurs haute puissance sont commandés par des signaux de commande qui minimisent le gain lorsqu'aucun paquet de données n'est commuté par leur intermédiaire à destination des commutateurs d'alimentation.

**22.** Routeur selon l'une quelconque des revendications 15 à 21, dans lequel le commutateur d'émetteur comprend un commutateur 2xn qui commute l'énergie RF circulant du port d'émetteur vers lesdits n commutateurs d'alimentation, dans lequel le premier des deux ports est couplé à l'émetteur RF et le second des deux ports est un port d'essai d'émetteur, ce qui permet la surveillance de différents paramètres, incluant la puissance RF d'entrée provenant de l'émetteur local.

**23.** Routeur selon l'une quelconque des revendications 15 à 22, dans lequel le commutateur de récepteur comprend en outre des moyens pour commuter l'énergie RF circulant desdits n commutateurs d'alimentation vers ledit port de récepteur local, le commutateur de récepteur étant un commutateur RF 2xn dans lequel le premier des deux ports est couplé au récepteur local et le second port est utilisé comme port d'essai de récepteur, ce qui permet la surveillance de différents paramètres, incluant le niveau du signal reçu provenant des différents ports d'alimentation.

**24.** Routeur selon l'une quelconque des revendications 15 à 23, dans lequel les n commutateurs d'alimentation sont définis par m égal à un nombre entre 1 et 8 ports, et n égal à un nombre entre 1 et 8 commutateurs, de façon à alimenter nxm ports d'alimentation en RF optique, où nxm est égal à un nombre entre 1 et 64.

**25.** Routeur selon l'une quelconque des revendications 1 à 24, dans lequel ledit ensemble de commutateur RF est commuté par des signaux de commande de façon à permettre une émission de paquets de données modulant une énergie RF à une première fréquence radio vers un ou plusieurs noeuds de réseau situés dans une ou plusieurs directions, et à permettre en même temps une commutation d'un ou plusieurs ports d'alimentation de façon à recevoir des paquets de données provenant d'un ou plusieurs noeuds de réseau, dans lesquels les paquets de données de réception modulent une énergie RF à une seconde fréquence radio différente de la première fréquence radio.

**26.** Routeur selon l'une quelconque des revendications 1 à 25, dans lequel les ports d'alimentation (16-18) sont disposés côte à côte, ce qui forme de multiples secteurs couvrant chacun approximativement 7,5 degrés dans le plan de commutation.

**27.** Routeur selon la revendication 26, ayant 16 ports d'alimentation en RF optique formant 16 secteurs spatiaux contigus couvrant une taille totale de secteurs d'approximativement 120 degrés.

**28.** Routeur selon la revendication 1, dans lequel les ports d'alimentation sont disposés côte à côte, ce qui forme de multiples secteurs couvrant chacun approximativement 7,5 degrés dans le plan de commutation et approximativement 7,5 degrés dans le plan perpendiculaire au plan de commutation.

**29.** Routeur selon la revendication 1, dans lequel les ports d'alimentation sont disposés de façon à produire des faisceaux polarisés verticalement.

**30.** Routeur selon la revendication 1, dans lequel les ports d'alimentation sont disposés de façon à produire des faisceaux polarisés horizontalement.

**31.** Routeur selon la revendication 1, dans lequel une première partie des ports d'alimentation est agencée de façon à produire des faisceaux polarisés verticalement en provenance de l'émetteur local et une seconde partie des ports d'alimentation est agencée de façon à recevoir des faisceaux polarisés horizontalement à destination du récepteur local ou vice versa, ce qui réduit l'interférence et augmente l'isolation entre certains groupes de noeuds d'émission et de noeuds de réception fonctionnant dans la même zone en utilisant des fréquences rapprochées.

**32.** Routeur selon la revendication 1, dans lequel l'antenne de focalisation et de collimation en RF optique (11) est une lentille cylindrique multicouche à gradient d'indice RF focalisant des faisceaux RF dans un plan perpendiculaire à l'axe de la lentille cylindrique, dans lequel le plan de focalisation est aligné de façon à alimenter un premier groupe de multiples ports d'alimentation disposés en un secteur autour de la lentille afin de recevoir des faisceaux d'énergie RF provenant de noeuds voisins, et un second groupe séparé de ports d'alimentation disposés en un secteur autour de la lentille cylindrique à un niveau différent du premier groupe, dans lequel le second groupe génère des faisceaux d'émission d'énergie RF vers des noeuds voisins.

**33.** Routeur selon la revendication 1, dans lequel l'antenne de focalisation et de collimation en RF optique (11) est disposée avec lesdits ports d'alimentation en RF optique configurés en un premier groupe de multiples ports d'alimentation couplés à un ensemble de commutateur de récepteur lui-même couplé au récepteur local, et en un second groupe de ports d'alimentation couplés à un ensemble de commutateur d'émetteur lui-même couplé à l'émetteur local, dans lequel le premier groupe et le second groupe alimentent différentes ouvertures en RF optique de façon à permettre simultanément l'émission et la réception de paquets de données.

**34.** Routeur selon la revendication 1, dans lequel l'antenne de focalisation et de collimation en RF optique (11) est disposée avec lesdits ports d'alimentation en RF optique alimentant un élément du groupe se composant de : lentilles de Luneberg sphériques séparées, parties séparées d'une lentille cylindrique, antennes à réflecteur parabolique séparées, antennes en cornet séparées et antennes réseau à plaque séparées, permettant une émission et une réception simultanées ou séparées de paquets de données modulant une énergie RF.

**35.** Routeur selon la revendication 34, dans lequel les ports d'alimentation d'émission et de réception séparés possèdent des amplificateurs à faible bruit placés de façon à recevoir des signaux provenant directement des ports d'alimentation de réception séparés.

**36.** Routeur selon la revendication 34, dans lequel les ports d'alimentation en RF optique séparés sont utilisés pour émettre et recevoir des paquets de données, dans lequel des amplificateurs de puissance RF sont incorporés dans les ports d'alimentation en RF optique d'émission.

**37.** Routeur selon la revendication 1, dans lequel l'antenne est une antenne à réflecteur ponctuel multifocal.

**38.** Routeur selon la revendication 1, dans lequel l'ensemble de commutateur RF et les ports d'alimentation forment des faisceaux d'émission et des faisceaux de réception séparés dans lesquels, au niveau de noeuds spécifiés, les faisceaux des ports d'alimentation d'émission sont polarisés perpendiculairement à la polarisation des faisceaux des ports d'alimentation de réception.

**39.** Routeur selon la revendication 38, dans lequel une multiplicité de noeuds d'émetteur-récepteur sont situés à des distances éloignées desdits noeuds spécifiés, les ports d'alimentation séparés permettant d'émettre lesdits faisceaux à une première polarisation afin qu'ils soient reçus par un émetteur-récepteur recevant un faisceau provenant d'un port d'alimentation associé à la première polarisation et recevant un faisceau provenant d'un port d'alimentation associé à une seconde polarisation perpendiculaire à la première polarisation émise par lesdits noeuds spécifiés.

FIG. 1

EP 1 098 455 B1

FIG. 2

EP 1 098 455 B1

FIG. 3

FIG. 4

FIG. 5

FIG. 6